# EUROPÄISCHE PATENTSCHRIFT

(11) **EP 4 077 031 B1**
(45) Veröffentlichungstag und Bekanntmachung des Hinweises auf die Patenterteilung: **03.09.2025**
(21) Anmeldenummer: 21725716.1
(22) Anmeldetag: 06.05.2021
(51) Int. Cl.: B60L 53/12

(54) **VORRICHTUNG UND VERFAHREN ZUR INDUKTIVEN ÜBERTRAGUNG ELEKTRISCHER ENERGIE ZU EINEM WASSERFAHRZEUG UND LADESYSTEM**
DEVICE AND METHOD FOR INDUCTIVELY TRANSMITTING ELECTRICAL ENERGY TO A WATERCRAFT AND CHARGING SYSTEM
DISPOSITIF ET PROCÉDÉ DE TRANSMISSION INDUCTIVE D'ÉNERGIE ÉLECTRIQUE À UNE EMBARCATION ET SYSTÈME DE CHARGE

(30) Priorität: 20.05.2020 DE 102020113744
(43) Veröffentlichungstag der Anmeldung: 26.10.2022
(73) Patentinhaber: ENRX IPT GmbH, 79588 Efringen-Kirchen (DE)
(72) Erfinder: WECHLIN, Mathias, 79400 Kandern (DE)
(74) Vertreter: Patentanwälte Bressel und Partner mbB
(86) Internationale Anmeldenummer: PCT/EP2021/061954
(87) Internationale Veröffentlichungsnummer: WO 2021/244818

(56) Entgegenhaltungen:
- WO-A1-2016/140239
- JP-A- 2010 011 696
- KR-B1- 101 596 923
- KR-B1- 101 596 923
- US-A1- 2015 002 092

## Beschreibung

Die Erfindung betrifft eine Vorrichtung zur induktiven Übertragung elektrischer Energie zwischen einer am Ufer eines Gewässers oder in dem Gewässer angeordneten Stromversorgungseinheit und einem gegenüber dem Ufer verfahrbaren Wasserfahrzeug nach dem Oberbegriff des Anspruchs 1, ein Ladesystem nach dem Oberbegriff des Anspruchs 11 sowie ein Verfahren zur induktiven Übertragung elektrischer Energie zwischen der Ladestation und dem Wasserfahrzeug nach dem Oberbegriff des Anspruchs 13.

Aus der WO 2017/125153 A1 ist eine Ladevorrichtung zum Laden von Batterien an Bord eines Bootes, eines Schiffes oder eines Seeschiffes bekannt, welche ein Element umfasst, das sich über eine Kante eines Docks, eines Kais oder eines Pontons erstrecken kann. Das Element trägt eine Stützstruktur, die sowohl Mittel zum lösbaren Verriegeln mit dem Boot, dem Schiff oder dem Seeschiff als auch eine Primärspule trägt, welche in Wirkverbindung mit einer Sekundärspule im Schiffsrumpf gebracht werden kann trägt. Dies erfordert jedoch eine aufwendige Stützstruktur, und zudem müssen die Mittel zum lösbaren Verriegeln mit dem Boot, dem Schiff oder dem Seeschiff und auch die Primärspule stets den unterschiedliche Wasserhöhen, welche durch kleinere Schwankungen, z.B. aufgrund des Wellengangs des Gewässers, und zum anderen durch die Gezeiten oder Hoch- oder Niedrigwasser bedingte Höhenunterschiede, nachgeführt werden. Dies erfordert in der Regel ausreichend Zeit, um die Verbindung zwischen der Ladevorrichtung und dem Boot, dem Schiff oder dem Seeschiff herzustellen und wird deshalb in der Regel nur für ein längerdauerndes Laden in Betracht gezogen, beispielsweise bei einem längeren Aufenthalt des Boots, Schiffes oder Seeschiffes in einem Hafen oder Reparaturdock. Außerdem ist dies technisch aufwendig zu lösen.

Gerade im Bereich des Fährbetriebs mit kleineren und mittelgroßen Wasserfahrzeugen, welche den ganzen Tag in kurzen Abständen und dann aber nur für kurze Zeit an einem Ufer oder Quai andocken und einige wenige Passagiere und/oder Fracht anlanden oder aufnehmen, besteht aber der Wunsch, die auf dem Wasserfahrzeug vorhandenen Batterien oder Akkumulatoren möglichst oft, aber rasch und innerhalb der kurzen Andockzeit zu laden.

Die WO 2016/140239 A1 betrifft ein Schiffsenergieversorgungssystem, das ein Schiff unabhängig vom Meeresspiegel mit Energie versorgen kann. Das Schiffsstromversorgungssystem liefert berührungslos Energie von einer an einer Kaimauer vorgesehenen Stromversorgungsspule zu einer auf einem Schiff vorgesehenen Stromversorgungsspule. Die Speisespule bewegt sich bei steigendem oder fallendem Meeresspiegel in vertikaler Richtung entlang der Kaimauer. Außerdem ist die Stromversorgungsspule in einem Gehäuse untergebracht, das auf der Meeresoberfläche schwimmt, wobei ein Schwimmkörper an einer Bodenfläche des Gehäuses angebracht.

Die JP 2010 011 696 A betrifft ein Schiffsstromversorgungssystem zur Versorgung eines Schiffes von der Außenseite des Schiffes mit einem stromaufnehmenden Stromempfangselement, das mit einem Energiesystem im Schiff verbunden ist und an einem zur Außenseite des Schiffes exponierten Abschnitt auf der Seite des Schiffes angebracht ist, um dem Schiff während des Anlegens verbrauchten Energie zu liefern. An Land ist ein Stromversorgungselement angeordnet, das dem Stromempfangselement auf dem Schiff berührungslos zugewandt und mit einem landseitigen Stromsystem verbunden ist, um das Stromversorgungssystem des Schiffs mit Strom aus dem Landseitigen Stromversorgungssystem zu versorgen
Die US 2015/002092 A1 betrifft ein Unterwasserstromversorgungssystem, das mit einer Auf-/Abstiegsstation ausgestattet ist, welche unter Wasser zwischen der Wassertiefe, in der ein Unterwasserbewegungskörper wirkt, und der Nähe der Wasseroberfläche auf- und abtaucht. Weiter ist eine Ladestation vorgesehen, die die Auf-/Abstiegsstation drahtlos mit elektrischem Strom versorgt.

Die KR 101 596 923 B1 betrifft ein Verfahren zur drahtlosen Energieversorgung eines Schiffes vom Boden aus unter Verwendung einer drahtlosen Energieversorgungsvorrichtung für das Schiff, welche umfasst: eine Befestigungseinheit, die in Form einer Säule mit einer oberen und einer unteren Richtung an einer linken und einer rechten Seite an einer Wand eines Hafenkais, in dem das Schiff verankert ist, installiert ist; eine Einspanneinheit mit einem Körper, der in einer Längsrichtung bewegt wird, indem er in eine Nut der Befestigungseinheit eingesetzt wird, und in dem ein Raum zur Aufnahme von Wasser im Inneren ausgebildet ist; eine Auftriebsvorrichtung zum Steuern einer Höhe eines Meeresspiegels vom Meer aus, indem sie an einem unteren Teil des Körpers installiert ist; eine Einspritzpumpe zum Einspritzen von Wasser in das Innere des Körpers und der Auftriebsvorrichtung und eine Auslasspumpe, die das Wasser aus dem Inneren des Körpers und der Auftriebsvorrichtung nach außen auslässt; eine Stromzufuhreinheit, die eine Stromzufuhreinrichtung zum drahtlosen Zuführen von magnetischer Energie enthält, indem sie an einem oberen Teil der Einspanneinheit installiert ist; eine Stromsammeleinheit, die eine Stromsammeleinrichtung zum drahtlosen Empfangen der magnetischen Energie von der Stromzufuhreinrichtung enthält, indem sie auf dem Schiff montiert ist; und eine Steuereinheit zum Steuern der Höhe des Meeresspiegels vom Meer aus über die Auftriebsvorrichtung durch Betätigen der Einspritzpumpe oder der Auslasspumpe der Einspanneinheit.

Der Erfindung liegt deshalb die Aufgabe zugrunde, eine Vorrichtung und ein Verfahren zur induktiven Übertragung elektrischer Energie zu einem Wasserfahrzeug bereitzustellen, welche die oben genannten Nachteile überwinden und eine möglichst einfache, wasserstandunabhängige und schnelle induktive Übertragung elektrischer Energie zwischen einem Wasserfahrzeug und einer Ladestation an einem Ufer eines Gewässers ermöglichen.

Diese Aufgabe löst die Erfindung durch eine Vorrichtung zur induktiven Übertragung elektrischer Energie zwischen einer am Ufer eines Gewässers oder in dem Gewässer angeordneten Stromversorgungseinheit und einem gegenüber dem Ufer verfahrbaren Wasserfahrzeug mit den Merkmalen des Anspruchs 1, ein Ladesystem mit den Merkmalen des Anspruchs 11 sowie ein Verfahren zur induktiven Übertragung elektrischer Energie zwischen einer am Ufer eines Gewässers oder in dem Gewässer angeordneten Stromversorgungseinheit und einem gegenüber dem Ufer verfahrbaren Wasserfahrzeug mit den Merkmalen des Anspruchs 13. Vorteilhafte Weiterbildungen und bevorzugte Ausgestaltungen der Erfindung sind in den Unteransprüchen angegeben.

Eine eingangs genannte Vorrichtung zur induktiven Übertragung elektrischer Energie zwischen einer am Ufer eines Gewässers oder in dem Gewässer angeordneten Stromversorgungseinheit und einem gegenüber dem Ufer verfahrbaren Wasserfahrzeug ist erfindungsgemäß dadurch gekennzeichnet, dass eine mit der Primärspule verbundene Höheneinstellvorrichtung vorgesehen ist, um die Primärspule in eine in Richtung des Auftriebs verlaufende Höhenrichtung in gleichbleibendem Höhenabstand zu einer Wasseroberfläche zu halten.

Bevorzugt kann mittels der Höheneinstellvorrichtung der Höhenabstand zwischen Wasseroberfläche und Primärspule einstellbar sein.

Weiter kann die Höheneinstellvorrichtung einen mit der Primärspule verbundenen Schwimmkörper aufweisen. Vorteilhaft kann der Abstand zwischen Schwimmkörper und Primärspule in Höhenrichtung verstellbar sein. Weiter kann vorteilhaft der Schwimmkörper mittels eines in Höhenrichtung längenverstellbaren Verbindungselements mit der Primärspule verbunden sein. Bevorzugt können die Auftriebseigenschaften des Schwimmkörpers veränderbar sein. Dabei kann der Schwimmkörper mittels eines Zugelements mit dem Gewässergrund oder dem Ufer verbindbar sein, wobei das Zugelement in der Länge verstellbar sein kann. Auch kann das Zugelement mittels einer Einholvorrichtung einholbar sein.

Gemäß den Ansprüchen weist die Vorrichtung eine Neigungseinstellvorrichtung zur Einstellung der Neigung der Primärspule auf.

Bevorzugt kann die Primärspule mittels einer höhenverschieblichen Lagerung an dem Ufer in der Höhenrichtung beweglich gelagert sein.

Ein eingangs genanntes Ladesystem ist erfindungsgemäß dadurch gekennzeichnet, dass eine mit der Primärspule verbundene Höheneinstellvorrichtung vorgesehen ist, um die Primärspule in eine in Richtung des Auftriebs verlaufende Höhenrichtung in gleichbleibendem Höhenabstand zu einer Wasseroberfläche zu halten. Dabei kann die Vorrichtung zur induktiven Übertragung elektrischer Energie des Ladesystems wie oben und nachfolgend beschrieben ausgebildet sein.

Ein eingangs genanntes Verfahren zur induktiven Übertragung elektrischer Energie zwischen einer am Ufer eines Gewässers oder in dem Gewässer angeordneten Stromversorgungseinheit und einem gegenüber dem Ufer verfahrbaren Wasserfahrzeug ist erfindungsgemäß gekennzeichnet durch die Schritte: a) Ausrichten der beiden Spule aufeinander, b) vorher oder gleichzeitig Einstellen eines Höhenabstands zwischen Primärspule und einer Wasseroberfläche mittels einer Höheneinstellvorrichtung, c) induktives Übertragen elektrischer Energie zwischen der Primärspule und der Sekundärspule. Bevorzugt kann das Einstellen in Schritt b) in Abhängigkeit des Tiefgangs des Wasserfahrzeugs erfolgt. Weiter kann vorteilhaft bei einer Änderung des Tiefgangs des Wasserfahrzeugs der Höhenabstand der Primärspule von der Wasseroberfläche mittels der Höheneinstellvorrichtung an die Änderung des Tiefgangs angepasst wird.

Weitere Besonderheiten und Vorteile der Erfindung ergeben sich aus der folgenden Beschreibung bevorzugter Ausführungsbeispiele anhand der Zeichnungen. Diese zeigen:
- **Fig. 1**: eine schematische Vorderansicht auf ein erfindungsgemäßes Ladesystem mit einer erfindungsgemäßen Vorrichtung zur induktiven Übertragung elektrischer Energie zwischen einer am Ufer eines Gewässers angeordneten Ladestation und einem gegenüber dem Ufer verfahrbaren Wasserfahrzeug;
- **Fig. 2**: eine schematische Seitenansicht auf ein alternatives erfindungsgemäßes Ladesystem mit einer alternativen erfindungsgemäßen Vorrichtung zur induktiven Übertragung elektrischer Energie zwischen einer Ladestation und einem gegenüber dem Ufer verfahrbaren Wasserfahrzeug vor dem Andocken des Wasserfahrzeugs an die Ladestation;
- **Fig. 3**: eine Draufsicht auf das Ladesystem aus Fig. 2 von oben bei an die Ladestation angedocktem Wasserfahrzeug.

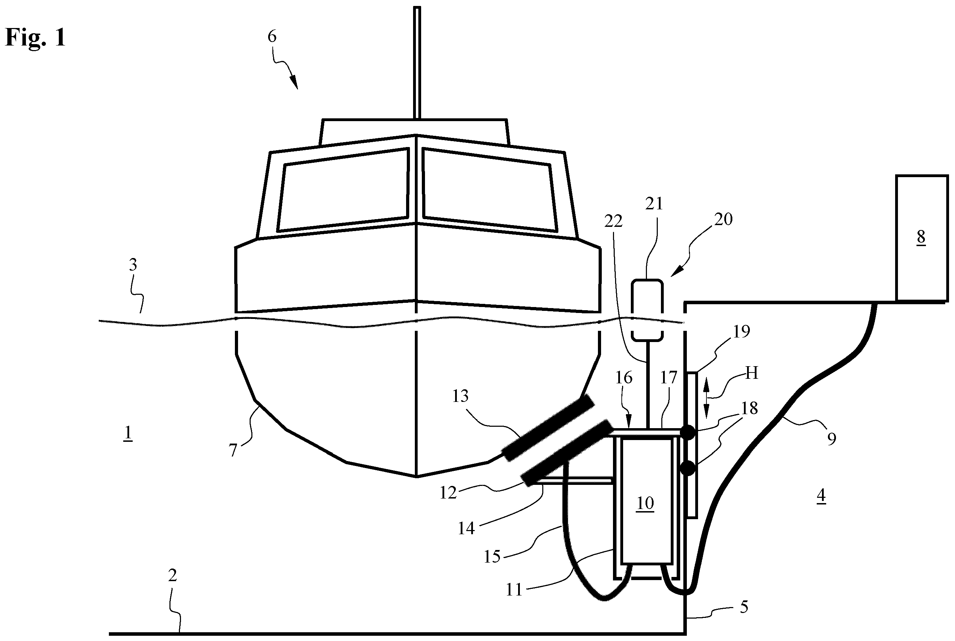

Fig. 1 zeigt zunächst ein Gewässer 1 mit einem Gewässergrund 2 und einer Wasseroberfläche 3 mit einem gewissen Wellengang, wobei es sich sowohl um ein stehendes Gewässer wie einen See oder ein Meer oder auch um ein fließendes Gewässer wie einen Fluss handeln kann. Das Gewässer 1 ist im Bereich eines Ufers, hier einer Anlegestelle 4 gezeigt. Dabei weist die Anlegestelle 4 einen etwas oberhalb der Wasseroberfläche 3 liegenden Boden und eine befestigte, in der vorliegenden Ausgestaltung vertikal verlaufenden Uferwand 6 auf, die vom Boden bis zum Gewässergrund 2 reicht und überwiegend unterhalb der Wasseroberfläche 3 liegt. Die Uferwand kann aber auch bis zu einem gewissen Maß schräg verlaufen, bevorzugt aber in einem Winkel kleiner 30° zur Vertikalen.

In dem Gewässer 1 schwimmt ein motorisch angetriebenes Wasserfahrzeug 6 für Personen, welche an der Anlegestelle 4 anlegt hat und bevorzugt in einer gegenüber der Anlegestelle 4 ortsfesten oder weitgehend ortsfesten Stellung gehalten wird, beispielsweise in dem das Wasserfahrzeug 6 an der Anlegestelle 4 vertaut ist und somit nur innerhalb des durch die Vertäuung vorgegebenen Spielraums etwas beweglich ist. Anstelle eines Wasserfahrzeugs für Personen kann es sich aber auch um ein Wasserfahrzeug für Landfahrzeuge, einen Lastkahn, ein Frachtschiff etc. handeln. Die vom Bug aus gezeigte Wasserfahrzeug 6 weist einen Rumpf 7 mit einer an sich bekannten Rumpfform auf, der mit einem gewissen Tiefgang unterhalb die Wasseroberfläche 3 reicht.

Die oben beschriebene Ausgestaltung ist dem Fachmann grundsätzlich bekannt und bedarf keiner weiteren Erläuterungen.

Vorliegend ist jedoch an der Anlegestelle 4 zusätzlich ein erfindungsgemäßes Ladesystem vorgesehen, welches nachfolgend im Detail erläutert wird. Hierzu ist an der Anlegestelle 4 eine Netzstromversorgung 8 vorgesehen, welche aus einem Versorgungsnetz mit elektrischer Energie versorgt werden kann. Das Versorgungsnetz kann dabei auch ein isoliertes Inselnetz sein oder nur einen kleinen Bereich der Anlegestelle 4 mit Strom versorgen, oder aber ein großflächiges Versorgungsnetz mit einer Vielzahl von Einspeisepunkten.

Von der Netzstromversorgung 8 wird über ein Stromversorgungskabel 9 eine Stromversorgungseinheit 10 des erfindungsgemäßen Ladesystems mit elektrischer Energie versorgt.

Die Stromversorgungseinheit 10 ist ihrerseits über ein Ladekabel 11 mit einer ersten Spule 12 zur induktiven Übertragung elektrischer Energie zu einer an der Unterseite des Schiffsrumpfs 7 angeordneten zweiten Spule 13. Dabei dient die erste Spule 12 hier als Primärspule, während die zweite Spule 13 als Sekundärspule dient. Die zweite Spule 13 ist über einen nicht gezeigten Anschluss mit dem elektrischen Bordsystem des Wasserfahrzeugs 6 verbunden, welches insbesondere einen ebenfalls nicht gezeigten elektrischen Energiespeicher umfasst. Je nach Anwendung und Größe des Energiespeichers dient dieser zur Versorgung von Teilen oder des ganzen elektrischen Bordsystems des Wasserfahrzeugs 6. Hat das Wasserfahrzeug 6 einen elektrischen Fahr- oder Hilfsfahrantrieb, kann auch dieser durch den Energiespeicher mit elektrischer Energie versorgt werden.

Die Stromversorgungseinheit 10 dient dabei zu Anpassung der aus der Netzstromversorgung 8 bereitgestellten elektrischen Energie zum Speisen der ersten Spule 12, um in an sich bekannter Weise induktiv elektrische Energie zur Sekundärspule 13 zu übertragen. Ggf. kann die Stromversorgungseinheit 10 auch direkt an das Stromversorgungsnetz ohne Zwischenschaltung der Netzstromversorgung 8 angeschlossen sein, wobei dann eben die bereitgestellte elektrische Energie aus dem Stromversorgungsnetz für die Speisung der ersten Spule 12 angepasst werden muss.

Die Spulen 12, 13 bilden insofern die wesentlichen Bestandteile einer erfindungsgemäßen Vorrichtung zur induktiven Übertragung elektrischer Energie zwischen der am Ufer 4 des Gewässers 1 angeordneten Ladestation und dem gegenüber dem Ufer 4 verfahrbaren Wasserfahrzeug 6. Die konkrete Ausgestaltung einer solchen induktiven Energieübertragung zwischen zwei Spulen 12, 13 ist dem Fachmann geläufig und Bedarf keiner näheren Erörterung.

Die erste Spule 12 ist dabei mittels eines Befestigungsrahmens 14 an einer Seitenwandung 15 eines Schutzgehäuses 16 der Stromversorgungseinheit 10 angeordnet. Dabei umgibt die Seitenwandung 15 die Stromversorgungseinheit 10 vollständig und ragt auf ihrer unteren Seite über die Stromversorgungseinheit 10 nach unten zum Grund 2 hin. Auf ihrer in vertikaler Richtung oberen Seite ist die Seitenwandung 15 mit einer oberen Abdeckung 17 luftundurchlässig verbunden. Auf ihrer unteren, zum Grund 2 des Gewässers 1 hin weisenden Seite ist das Schutzgehäuse 16 unten offen, wobei aufgrund des Taucherglockenprinzips die im Schutzgehäuse 16 befindliche Luft das Eindringen von Wasser in den Innenraum des Schutzgehäuses 16 und somit in die Stromversorgungseinheit 10 verhindert. In einer alternativen Ausgestaltung kann das Schutzgehäuse 16 aber auch vollständig gegen das Eindringen von Wasser abgedichtet sein. Ggf. kann das Schutzgehäuse 16 auch direkt durch das Gehäuse der Stromversorgungseinheit 10 gebildet sein, welches dann wiederum wasserdicht ausgeführt ist.

Das Schutzgehäuse 16 ist vorliegend mittels einer aus zwei Rollen bestehenden Rollenanordnung 18 längs einer an der Uferwand 5 angeordneten Längsführung 19 in Höhenrichtung H beweglich an der Uferwand 5 gelagert. Eine Bewegung in einer Ebene senkrecht zur Höhenrichtung H wird möglichst weitgehend unterbunden, wobei ein gewisses Spiel in engen Grenzen möglich sein kann. Die Längsführung 19 kann beispielsweise aus zwei mit ihren offenen Seiten aufeinander zu weisenden, in einem Abstand voneinander angeordneten U-Profilen gebildet sein, wobei in jedem U-Profil dann eine Rolle um eine waagrechte Achse drehbar ist. Die beiden Rollen sind dann an den gegenüberliegenden Enden eines von oben gesehen T-förmigen Achslagers angeordnet, dessen Mittelsteg an dem Gehäuse befestigt. Andere Längsführungen, die eine Bewegung in Höhenrichtung H erlauben, sind ebenfalls für den Fachmann problemlos denkbar.

Dabei ist unter elektrischer Energieversorgung die Versorgung mit elektrischer Energie bei höherer Leistung zu verstehen, welche zum Laden von Energiespeichern des Wasserfahrzeugs dient, welche wiederum Teile oder das gesamte Bordstromnetz und/oder der elektrischen Fahr- und Hilfsantriebe des Wasserfahrzeugs 6 dienen. Typische Ladeleistungen liegen dabei regelmäßig im Bereich von einigen Kilowatt aufwärts.

Die Stromversorgungseinheit 10 dient dabei zu Anpassung der aus der Netzstromversorgung 8 bereitgestellten elektrischen Energie zum Speisen der ersten Spule 12, um in an sich bekannter Weise induktiv elektrische Energie zur Sekundärspule 13 zu übertragen. Ggf. kann die Stromversorgungseinheit 10 auch direkt an das Stromversorgungsnetz ohne Zwischenschaltung der Netzstromversorgung 8 angeschlossen sein, wobei dann eben die bereitgestellte elektrische Energie aus dem Stromversorgungsnetz für die Speisung der ersten Spule 12 angepasst werden muss.

Um eine möglichst gute induktive Kopplung und somit Energieübertragung zwischen der Primärspule 12 und der Sekundärspule 13 zu erreichen, werden diese zum einen möglichst gut in Kielrichtung der Wasserfahrzeug 6 und in waagrechter Querrichtung hierzu aufeinander ausgerichtet. Hierzu kann vorteilhaft eine mechanische und/oder sensorgestützte Positioniervorrichtung verwendet werden.

Um eine weitere Verbesserung der induktiven Kopplung zwischen Primärspule 12 und Sekundärspule 13 zu erreichen und zudem eine vom Pegel der Wasseroberfläche 3 möglichst unabhängige Positionierung der Primärspule 12 in Höhenrichtung H zu erreichen, ist eine Höheneinstellvorrichtung 20 vorgesehen. Die Höheneinstellvorrichtung 20 weist hierzu einen Schwimmkörper 21 auf, welcher mittels eines Verbindungselements 22 fest an dem Schutzgehäuse 16 befestigt ist. Der Schwimmkörper 21 kann als an sich bekannter Auftriebskörper ausgebildet sein, beispielsweise aus einem selbst schwimmfähigen Material oder aus einem bevorzugt mit Luft und/oder einem leichten Feststoff, z.B. einem bevorzugt geschlossenporigen Kunststoffschaum gefüllten Hohlkörper.

Im Zusammenspiel mit der höhenbeweglichen Lagerung des Schutzgehäuses 16 über die Rollenanordnung 18 und die Längsführung 19 hält der Schwimmkörper 21 das Schutzgehäuse 16 und somit auch die Primärspule 12 stets in gleichem Abstand zur Wasseroberfläche 3 und somit auch zur Sekundärspule 13, da diese mit dem Wasserfahrzeug 6 stets in weitgehend gleichem Abstand zur Wasseroberfläche 3 ist.

Um unterschiedliche Beladungszustände des Wasserfahrzeugs 6 auszugleichen, welche den jeweiligen Tiefgang und somit den Höhehabstand der Sekundärspule 13 zur Wasseroberfläche 3 beeinflussen, kann die Sekundärspule 13 vorteilhaft noch zusätzlich höhenverstellbar am oder im Schiffsrumpf 7 angeordnet sein.

Alternativ oder zusätzlich hierzu kann auch die Primärspule 12 höhenverstellbar am Schutzgehäuse 16 angeordnet sein. So kann beispielsweise das Verbindungselement 22 vorteilhaft in der Länge verstellbar ausgebildet sein, beispielsweise aus zwei teleskopartig miteinander verbundenen Teilen bestehen, welche motorisch den Abstand zwischen Schwimmkörper 21 und Schutzgehäuse 16 vergrößern oder verkleinern können. Dies kann vorteilhaft durch ein entsprechendes Signal des Wasserfahrzeugs 6 erfolgen, womit eine Steuerung des einstellbaren Verbindungselements 22 und/oder des Ladesystems entsprechend angesteuert wird. Ist die Beladung des Wasserfahrzeugs 6 groß, der Tiefgang also größer als normal, so wird das Verbindungselement 22 gelängt, um dies auszugleichen. Ist hingegen die Beladung gering, der Tiefgang also kleiner als normal, dann wird das Verbindungselement 22 verkürzt, so dass das Schutzgehäuse 16 mit daran angeordneter Primärspule 12 weiter oben gehalten wird. Dies kann insbesondere bei Frachtschiffen, beispielsweise für Container vorteilhaft sein, bei denen sich im Laufe des Löschens der Ladung oder des Beladens der Tiefgang deutlich ändern kann.

Eine alternative oder zusätzliche Lösung kann vorsehen, dass die Auftriebseigenschaften des Schwimmkörpers 21 geändert werden, beispielsweise, in dem mit Luft gefüllte Hohlräume im Schwimmkörper 21 mit Wasser, insbesondere aus dem umgebenden Gewässer 1, gefüllt werden, der Schwimmkörper 21 somit weniger Auftrieb bietet und die Primärspule 12 dann nach unten abgesenkt wird. Bevorzugt kann das derart aufgenommenen Wasser dann wieder aus dem Schwimmkörper 21 herausgepumpt und durch Umgebungsluft ersetzt werden, so dass der Schwimmkörper 21 einen höheren Auftrieb erhält und gemeinsam mit der Primärspule 12 dann nach oben angehoben wird. Ggf. kann auch durch eine Änderung der Geometrie des Schwimmkörpers 21 seine Auftriebseigenschaften eingestellt werden.

Es versteht sich von selbst, dass es bei geeigneter Ausgestaltung des Ladesystems bereits ausreicht, wenn nur die Primärspule 12 höhenbeweglich an der Anlegestelle bzw. dem Ufer 4 gelagert ist und mittels der Höheneinstellvorrichtung 20 in gleichem Abstand zur Wasseroberfläche 3 gehalten werden kann. Wird beispielsweise auch die Stromversorgungseinheit 10 an der Anlegestelle 4 am Ufer 4 oder unter Wasser fest angeordnet, so reicht es aus, die Primärspule 12 mittels des Befestigungsrahmens 14 höhenbeweglich an der Anlegestelle 4 anzuordnen. Ggf. kann die in Fig. 1 gezeigt Anordnung aus Spule 12 und Schutzgehäuse 16 oder nur die Primärspule 12 auch in einem anderen Bereich des Gewässers 1 angeordnet werden, beispielsweise an einem am Gewässergrund 2 angeordneten Anlegemast.

Weiter ist die Primärspule 12 zusätzlich auch in ihrer Neigung verstellbar, um besser an unterschiedlich geneigte Schiffsrumpfe 7 angepasst werden zu können. Dies kann ggf. durch Übertragung eines entsprechenden Signals vom Wasserfahrzug 6 an die Steuerung der Primärspule 12 oder einer Neigungseinstellvorrichtung der Primärspule 12 erreicht werden, so dass die Primärspule 12 von vornherein auf die Neigung der Sekundärspule 13 des heranfahrenden Wasserfahrzeugs 6 eingestellt werden kann.

In einer Weiterbildung kann anstelle des oberhalb des Schutzgehäuses 16 angeordneten Schwimmkörpers 21 auch das Schutzgehäuse 16 und/oder die Stromversorgungseinheit 10 selbst als Schwimmkörper ausgebildet sein. Dabei ist die hierdurch hervorgerufene Auftriebskraft so einzustellen, dass die Primärspule 12 in einem solchen Höhenabstand zur Wasseroberfläche 3 bleibt, dass sie mit der Sekundärspule 13 am Wasserfahrzeug 6 bezüglich der Höhe in eine günstige Kopplungsstellung kommt. Dies ist bei bezüglich des Rumpfs 7 gleich ausgebildeten Wasserfahrzeugen 6 durchaus möglich.

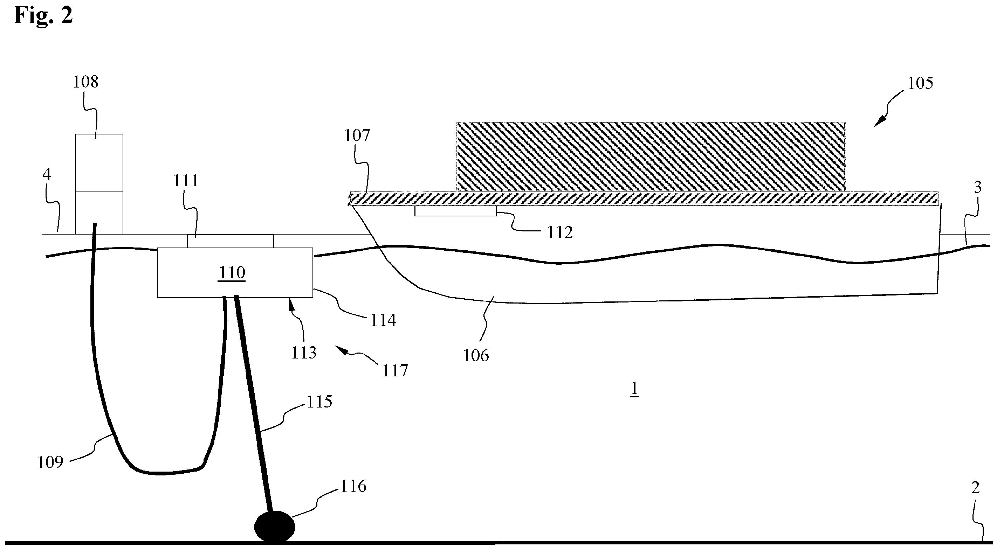

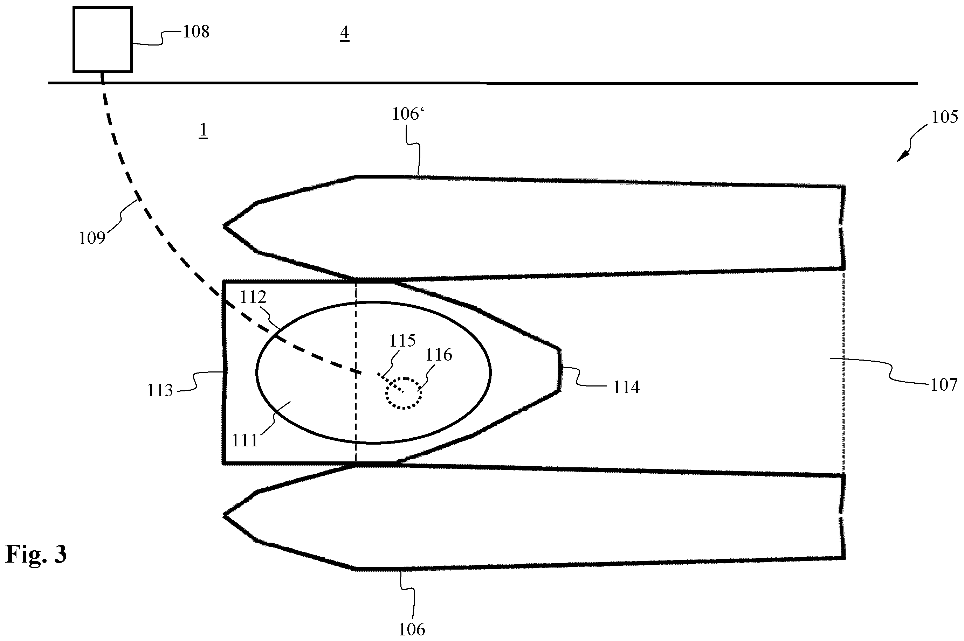

Bei dem in Fig. 2 und 3 gezeigten alternativen erfindungsgemäßen Ladesystem entsprechen wesentliche Teile dem in Fig. 1 gezeigten Ausführungsbeispiel, so dass nachfolgend vor allem die Unterschiede beschrieben werden. Für die gleichen oder entsprechenden Teile gelten die obigen Ausführungen entsprechend, sofern nichts anderes angegeben.

Bei dem vor allem in Fig. 2 gezeigten Ausführungsbeispiel ist am Ufer 4 des Gewässers 1 wieder ein erfindungsgemäßes Ladesystem vorgesehen, welches eine Netzstromversorgung 108 aufweist. Von der Netzstromversorgung 108 wird über ein Stromversorgungskabel 109 eine Stromversorgungseinheit 110 und eine mit diesem verbundene Primärspule 111 mit elektrischer Energie versorgt. Über eine Sekundärspule 112 wird ein motorisch angetriebenes Wasserfahrzeug 105 mit elektrischer Energie versorgt. Insofern gleichen sich die oben und hier beschriebenen Ausgestaltungen.

Die Stromversorgungseinheit 110 ist hier aber in einem Schwimmkörper 113 angeordnet oder bildet selbst den Schwimmkörper 113 aus, so dass die Primärspule 111 bevorzugt etwas oberhalb der Wasseroberfläche 3 angeordnet ist. Durch die Verwendung eines Schwimmkörpers 113 kann wie auch beim oben beschriebenen die Primärspule 111 in einer für die induktive Kopplung mit der Sekundärspule 112 günstigen Höhenabstand gehalten werden, der sich an das Niveau der Wasseroberfläche 3 anpasst.

Dabei ist das Wasserfahrzeug 105 hier als Katamaran mit zwei gleich ausgebildeten Rümpfen 106, 106' ausgebildet, welche durch ein Schiffsbord 107 verbunden sind. Bei der in Fig. 2 gezeigten Stellung kurz vor dem Andocken fährt das Wasserfahrzeug 105 auf einen keilförmigen Bug 114 des Schwimmkörpers 113 zu, wodurch das seitliche und längliche Ausrichten der Primärspule 111 und der Sekundärspule 112 des Wasserfahrzeugs 105 erleichtert wird. Die Kopplungsstellung ist dann in Fig. 3 von oben gezeigt, wo Primärspule 111 und Sekundärspule 112 einander direkt überdecken. Anstelle eine Katamaranrumpfes können aber auch anders ausgestaltete Rumpfformen verwendet werden.

Um den Höhenabstand zwischen der Primärspule 111 und der Wasseroberfläche 3 bzw. der Sekundärspule 112 zusätzlich beeinflussen zu können, beispielsweise für einen sich durch das Löschen bzw. Beladen des Wasserfahrzeugs 105 ändernden Tiefgang, ist bei der in Fig. 2 gezeigten Ausgestaltung eines Zugelements 115 vorgesehen, welches einerseits an der Stromversorgungseinheit 110 respektive dem Schwimmkörper 113 befestigt ist, und andererseits mittels einer Aufspulvorrichtung 116 am Gewässergrund 2. Die Aufspulvorrichtung 116 holt dabei das Zugelement 115, welches bevorzugt ein Seil, Stahlseil oder eine Trosse sein kann, ständig ein, um den Schwimmkörper 113 möglichst senkrecht oberhalb der Aufspulvorrichtung 116 zu halten.

Zugleich ist die Aufspulvorrichtung 116 aber so nachgiebig, bevorzugt elastisch nachgiebig eingestellt oder ausgebildet, dass beim Anfahren mit dem Wasserfahrzeug 105 oder bei Wasserströmungen etc. oder sich änderndem Niveau der Wasseroberfläche 3 der Schwimmkörper 113 mitgenommen werden kann, ohne dass er seine Höhenposition wesentlich ändert.

Um allerdings bei sich änderndem Tiefgang oder unterschiedlichen Tiefgängen unterschiedlicher Wasserfahrzeuge 105 eine Anpassung des Höhenabstands zwischen Primärspule 111 und Wasseroberfläche 3 bzw. der Sekundärspule 112 einstellen zu können, kann die Aufspulvorrichtung 116 eine entsprechend motorische Einstellung der Länge des Zugelements 115, sowohl ausgeben als auch einholen, und somit eine Einstellung der Höhe der Primärspule 111 und des Abstands zur Sekundärspule 112 bereitstellen.

Alternativ oder zusätzlich können auch wie oben bereits beschrieben auf die Auftriebseigenschaften des Schwimmkörpers 113 geändert werden, beispielsweise durch Einlassen von Umgebungswasser in Hohlräume des Schwimmkörpers 113 oder Leerpumpen dieser Hohlräume.

### Bezugszeichenliste

- 1: Gewässer
- 2: Grund des Gewässers
- 3: Wasseroberfläche
- 4: Ufer, Anlegestelle
- 5: befestigte Uferwand
- 6: Wasserfahrzeug, Fähre
- 7: Rumpf
- 8: Netzstromversorgung
- 9: Stromversorgungskabel
- 10: Stromversorgungseinheit
- 11: Ladekabel
- 12: Primärspule
- 13: Sekundärspule
- 14: Spulenbefestigungsrahmen
- 15: Seitenwand
- 16: Schutzgehäuse
- 17: oberer Abdeckung
- 18: Rollenanordnung
- 19: Fahrschiene, höhenverschiebliche Lagerung
- 20: Höheneinstellvorrichtung
- 21: Schwimmkörper
- 22: Verbindungselement
- 105: Wasserfahrzeug, Fähre
- 106, 106': Rumpf
- 107: Schiffsbord
- 108: Netzstromversorgung
- 109: Stromversorgungskabel
- 110: Stromversorgungseinheit
- 111: Primärspule
- 112: Sekundärspule
- 113: Schwimmkörper
- 114: keilförmiger Bug des Schwimmkörpers
- 115: Zugelement, Trosse
- 116: Aufspulvorrichtung
- 117: Höheneinstellvorrichtung

- H: Höhenrichtung

## Patentansprüche

1. Vorrichtung zur induktiven Übertragung elektrischer Energie zwischen einer am Ufer (4) eines Gewässers (1) oder in dem Gewässer (1) angeordneten Stromversorgungseinheit (10; 110) und einem gegenüber dem Ufer (4) verfahrbaren Wasserfahrzeug (6; 105), umfassend mindestens eine der Stromversorgungseinheit (10; 110) zugeordnete, auf und/oder im Gewässer (1) anzuordnende Primärspule (12; 111) und mindestens eine zum induktiven Übertragen der elektrischen Energie mit der Primärspule (12; 111) in Wirkverbindung bringbare, am Wasserfahrzeug (6) anzuordnende Sekundärspule (13; 112), wobei eine mit der Primärspule (12; 111) verbundene Höheneinstellvorrichtung (20; 117) vorgesehen ist, um die Primärspule (12; 111) in eine in Richtung des Auftriebs verlaufende Höhenrichtung (H) in gleichbleibendem Höhenabstand zu einer Wasseroberfläche (3) zu halten,
**dadurch gekennzeichnet, dass**
die Vorrichtung eine Neigungseinstellvorrichtung zur Einstellung der Neigung der Primärspule (12;111) aufweist.

2. Vorrichtung nach Anspruch 1, **dadurch gekennzeichnet, dass** mittels der Höheneinstellvorrichtung (20; 220) der Höhenabstand (H) zwischen Wasseroberfläche (3) und Primärspule (12; 111) einstellbar ist.

3. Vorrichtung nach Anspruch 1 oder 2, **dadurch gekennzeichnet, dass** die Höheneinstellvorrichtung (20; 117) einen mit der Primärspule (12; 111) verbundenen Schwimmkörper (21; 113) aufweist.

4. Vorrichtung nach Anspruch 3, **dadurch gekennzeichnet, dass** der Abstand zwischen Schwimmkörper (21; 113) und Primärspule (12; 111) in Höhenrichtung (H) verstellbar ist.

5. Vorrichtung nach Anspruch 4, **dadurch gekennzeichnet, dass** der Schwimmkörper (21) mittels eines in Höhenrichtung (H) längenverstellbaren Verbindungselements (22) mit der Primärspule (12) verbunden ist.

6. Vorrichtung nach Anspruch 1 oder 2, **dadurch gekennzeichnet, dass** die Auftriebseigenschaften des Schwimmkörpers (21; 113) veränderbar sind.

7. Vorrichtung nach einem der Ansprüche 3 bis 6, **dadurch gekennzeichnet, dass** der Schwimmkörper (113) mittels eines Zugelements (115) mit dem Gewässergrund (2) oder dem Ufer (4) verbindbar ist.

8. Vorrichtung nach Anspruch 7, **dadurch gekennzeichnet, dass** das Zugelement (115) in der Länge verstellbar ist.

9. Vorrichtung nach Anspruch 7 oder 8, **dadurch gekennzeichnet, dass** das Zugelement (115) mittels einer Einholvorrichtung (116) einholbar und/oder ausgebbar ist.

10. Vorrichtung nach einem der voranstehenden Ansprüche, **dadurch gekennzeichnet, dass** die Primärspule (12; 11) mittels einer Lagerung (19) an dem Ufer (4) in der Höhenrichtung (H) beweglich gelagert ist.

11. Ladesystem mit einer Vorrichtung nach Anspruch 1.

12. Ladesystem (19; 119; 219) nach Anspruch 11, **dadurch gekennzeichnet, dass** die Vorrichtung nach einem der Ansprüche 1 bis 10 ausgebildet ist.

13. Verfahren zur induktiven Übertragung elektrischer Energie zwischen einer am Ufer (4) eines Gewässers (1) oder in dem Gewässer (1) angeordneten Stromversorgungseinheit (10; 110) und einem gegenüber dem Ufer (4) verfahrbaren Wasserfahrzeug (6; 105), umfassend mindestens eine der Stromversorgungseinheit (10; 110) zugeordnete, auf und/oder im Gewässer (1) angeordnete Primärspule (12; 111) und mindestens eine zum induktiven Übertragen der elektrischen Energie mit der Primärspule (12; 111) in Wirkverbindung bringbare, am Wasserfahrzeug (6) angeordnete Sekundärspule (13; 112), aufweisend die Schritte:
a) Ausrichten der beiden Spule (12, 13; 111, 112) aufeinander,
b) vorher oder gleichzeitig Einstellen eines Höhenabstands zwischen Primärspule (12; 111) und einer Wasseroberfläche (3) mittels einer Höheneinstellvorrichtung (20; 117),
induktives Übertragen elektrischer Energie zwischen der Primärspule (12; 111) und der Sekundärspule (13; 112)
**gekennzeichnet durch den Schritt:**
Einstellen der Neigung der Primärspule (12; 111) auf die Neigung der Sekundärspule (13; 112) des Wasserfahrzeugs (6).

14. Verfahren nach Anspruch 13, **dadurch gekennzeichnet, dass** das Einstellen in Schritt b) in Abhängigkeit vom Tiefgang des Wasserfahrzeugs (6; 105) erfolgt.

15. Verfahren nach Anspruch 14, **dadurch gekennzeichnet, dass** bei einer Änderung des Tiefgangs des Wasserfahrzeugs (6; 105) der Höhenabstand der Primärspule (12; 111) von der Wasseroberfläche (3) mittels der Höheneinstellvorrichtung (20; 117) an die Änderung des Tiefgangs angepasst wird.

## Claims

1. A device for inductive transmission of electrical energy between a power supply unit (10; 110) arranged on the bank (4) of a body of water (1) or in the body of water (1) and a watercraft (6; 105) movable relative to the bank (4), comprising at least one primary coil (12; 111) associated with the power supply unit (10; 110) and to be arranged on and/or in the body of water (1), and at least one secondary coil (13; 112) which can be brought into operative connection with the primary coil (12; 111) for the inductive transmission of the electrical energy; 111) and is to be arranged on the watercraft (6), wherein a height adjustment device (20; 117) connected to the primary coil (12; 111) is provided in order to keep the primary coil (12; 111) at a constant height distance from a water surface (3) in a height direction (H) extending in the direction of the buoyancy,
**characterized in that**
the device has an inclination adjustment device for adjusting the inclination of the primary coil (12; 111).

2. The device according to claim 1, **characterized in that** the height distance (H) between the water surface (3) and the primary coil (12; 111) can be adjusted by means of the height adjustment device (20; 220).

3. The device according to claim 1 or 2, **characterized in that** the height adjustment device (20; 117) has a floating body (21; 113) connected to the primary coil (12; 111).

4. The device according to claim 3, **characterized in that** the distance between floating body (21; 113) and primary coil (12; 111) is adjustable in the height direction (H).

5. The device according to claim 4, **characterized in that** the floating body (21) is connected to the primary coil (12) by means of a connecting element (22) which is adjustable in length in the height direction (H).

6. The device according to claim 1 or 2, **characterized in that** the buoyancy properties of the floating body (21; 113) are variable.

7. The device according to one of claims 3 to 6, **characterized in that** the floating body (113) can be connected to the ground (2) of the body of water or the bank (4) by means of a traction element (115).

8. The device according to claim 7, **characterized in that** the traction element (115) is adjustable in length.

9. The device according to claim 7 or 8, **characterized in that** the traction element (115) can be retracted and/or extended by means of a retraction device (116).

10. The device according to one of the preceding claims, **characterized in that** the primary reel (12; 11) is movably mounted on the bank (4) in the height direction (H) by means of a bearing (19).

11. A loading system with a device according to claim 1.

12. The loading system (19; 119; 219) according to claim 11, **characterized in that** the device is designed according to one of claims 1 to 10.

13. A method for the inductive transmission of electrical energy between a power supply unit (10; 110) arranged on the bank (4) of a body of water (1) or in the body of water (1) and a watercraft (6; 105) movable relative to the bank (4), comprising at least one primary coil (12; 111) associated with the power supply unit (10; 110) and arranged on and/or in the body of water (1), and at least one secondary coil (13; 112) which can be brought into operative connection with the primary coil (12; 111) for inductive transmission of the electrical energy and is arranged on the watercraft (6), comprising the steps of
a) aligning the two coils (12, 13; 111, 112) with one another,
b) previously or simultaneously adjusting a height distance between the primary coil (12; 111) and a water surface (3) by means of a height adjustment device (20; 117),
inductive transmission of electrical energy between the primary coil (12; 111) and the secondary coil (13; 112)
**characterized by** the step:
adjusting the inclination of the primary coil (12; 111) to the inclination of the secondary coil (13; 112) of the watercraft (6).

14. The method according to claim 13, **characterized in that** the adjustment in step b) is carried out as a function of the draught of the watercraft (6; 105).

15. The method according to claim 14, **characterized in that** when the draught of the watercraft (6; 105) changes, the height distance of the primary coil (12; 111) from the water surface (3) is adapted to the change in draught by means of the height adjustment device (20; 117).

## Revendications

1. Dispositif pour la transmission inductive d'énergie électrique entre une unité d'alimentation électrique (10 ; 110) disposée sur la rive (4) d'un plan d'eau (1) ou dans le plan d'eau (1) et un véhicule nautique (6 ; 105) pouvant se déplacer par rapport à la rive (4), comprenant au moins une bobine primaire (12 ; 111) associée à l'unité d'alimentation électrique (10 ; 110) et à disposer sur et/ou dans le plan d'eau (1), et au moins une bobine secondaire (13 ; 112) pouvant être mise en liaison fonctionnelle avec la bobine primaire (12 ; 111) pour la transmission inductive de l'énergie électrique, devant être disposée sur le véhicule nautique (6), un dispositif de réglage de hauteur (20 ; 117) relié à la bobine primaire (12 ; 111) étant prévu pour maintenir la bobine primaire (12 ; 111) dans une direction de hauteur (H) s'étendant dans la direction de la portance à une distance de hauteur constante par rapport à une surface d'eau (3),
**caractérisé en ce que**
le dispositif comprend un dispositif de réglage de l'inclinaison pour régler l'inclinaison de la bobine primaire (12 ; 111).

2. Dispositif selon la revendication 1, **caractérisé en ce que** la distance de hauteur (H) entre la surface d'eau (3) et la bobine primaire (12 ; 111) est réglable à l'aide du dispositif de réglage de hauteur (20 ; 220).

3. Dispositif selon la revendication 1 ou 2, **caractérisé en ce que** le dispositif de réglage de hauteur (20 ; 117) comprend un flotteur (21 ; 113) relié à la bobine primaire (12 ; 111).

4. Dispositif selon la revendication 3, **caractérisé en ce que** la distance entre le flotteur (21 ; 113) et la bobine primaire (12 ; 111) est réglable dans la direction de hauteur (H).

5. Dispositif selon la revendication 4, **caractérisé en ce que** le flotteur (21) est relié à la bobine primaire (12) au moyen d'un élément de liaison (22) réglable en longueur dans la direction de hauteur (H).

6. Dispositif selon la revendication 1 ou 2, **caractérisé en ce que** les propriétés de flottabilité du flotteur (21 ; 113) sont modifiables.

7. Dispositif selon l'une quelconque des revendications 3 à 6, **caractérisé en ce que** le flotteur (113) est connectable au fond du plan d'eau (2) ou à la rive (4) au moyen d'un élément de traction (115).

8. Dispositif selon la revendication 7, **caractérisé en ce que** la longueur de l'élément de traction (115) est réglable.

9. Dispositif selon la revendication 7 ou 8, **caractérisé en ce que** l'élément de traction (115) est rétractable et/ou extractible à l'aide d'un dispositif de récupération (116).

10. Dispositif selon l'une quelconque des revendications précédentes, **caractérisé en ce que** la bobine primaire (12 ; 11) est montée de manière mobile dans la direction de hauteur (H) sur la rive (4) à l'aide d'un palier (19).

11. Système de chargement avec un dispositif selon la revendication 1.

12. Système de chargement (19 ; 119 ; 219) selon la revendication 11, **caractérisé en ce que** le dispositif est conçu selon l'une quelconque des revendications 1 à 10.

13. Procédé de transmission inductive d'énergie électrique entre une unité d'alimentation électrique (10 ; 110) disposée sur la rive (4) d'un plan d'eau (1) ou dans le plan d'eau (1) et un véhicule nautique (6 ; 105) pouvant se déplacer par rapport à la rive (4), comprenant au moins une bobine primaire (12 ; 111) associée à l'unité d'alimentation électrique (10 ; 110) et disposée sur et/ou dans le plan d'eau (1) et au moins une bobine secondaire (13 ; 112) pouvant être mise en liaison fonctionnelle avec la bobine primaire (12 ; 111) pour la transmission inductive de l'énergie électrique, disposée sur le véhicule nautique (6), comprenant les étapes suivantes :
a) alignement des deux bobines (12, 13 ; 111, 112) l'une par rapport à l'autre,
b) réglage préalable ou simultané d'une distance de hauteur entre la bobine primaire (12 ; 111) et une surface d'eau (3) à l'aide d'un dispositif de réglage de hauteur (20 ; 117), transmission inductive d'énergie électrique entre la bobine primaire (12 ; 111) et la bobine secondaire (13 ; 112)
**caractérisé par** l'étape suivante :
réglage de l'inclinaison de la bobine primaire (12 ; 111) par rapport à l'inclinaison de la bobine secondaire (13 ; 112) du véhicule nautique (6).

14. Procédé selon la revendication 13, **caractérisé en ce que** le réglage à l'étape b) s'effectue en fonction du tirant d'eau du véhicule nautique (6 ; 105).

15. Procédé selon la revendication 14, **caractérisé en ce que**, lors d'une modification du tirant d'eau du véhicule nautique (6 ; 105), la distance de hauteur entre la bobine primaire (12 ; 111) et la surface de l'eau (3) est adaptée à la modification du tirant d'eau à l'aide du dispositif de réglage de hauteur (20 ; 117).
